# EUROPÄISCHE PATENTSCHRIFT

(11) **EP 3 191 919 B1**
(45) Veröffentlichungstag und Bekanntmachung des Hinweises auf die Patenterteilung: **15.01.2020**
(21) Anmeldenummer: 15756595.3
(22) Anmeldetag: 20.08.2015
(51) Int. Cl.: G06F 3/01, G06F 3/03, G02B 27/00

(54) **BESTIMMUNG DER POSE EINES HMD**
DETERMINING THE POSE OF A HEAD-MOUNTED DISPLAY
DÉTERMINATION DE LA POSE D'UN AFFICHAGE TÊTE

(30) Priorität: 09.09.2014 DE 102014217961
(43) Veröffentlichungstag der Anmeldung: 19.07.2017
(73) Patentinhaber: Bayerische Motoren Werke Aktiengesellschaft, 80809 München (DE)
(72) Erfinder: GRAEF, Michael, 82166 Graefelfing (DE); GSINN, Markus, 83026 Rosenheim (DE); KAUFMANN, Matthias Roland, 85716 Unterschleissheim (DE); SPIESSL, Wolfgang, 80807 München (DE)
(86) Internationale Anmeldenummer: PCT/EP2015/069104
(87) Internationale Veröffentlichungsnummer: WO 2016/037819

(56) Entgegenhaltungen:
- EP-A2- 2 254 023
- WO-A1-00/52563
- WO-A1-2005/124429

## Beschreibung

Die Erfindung betrifft eine Datenbrille und ein Verfahren zur Bestimmung der Pose einer Datenbrille.

Heutzutage sind Datenbrillen (manchmal auch Head-mounted Display, HMD) bekannt, mit deren Hilfe dem Träger der Datenbrille Informationen angezeigt werden können. Die Datenbrille wird dabei wie eine gewöhnliche Brille, die als Sehhilfe verwendet wird, auf dem Kopf getragen. Gegenüber einer gewöhnlichen Brille umfasst die Datenbrille jedoch eine Anzeige, die beim Tragen der Datenbrille nahe dem oder den Augen des Benutzers angeordnet ist. Die Anzeige kann dabei zwei Teilanzeigen umfassen, eine für jedes Auge. Auf der Anzeige können dem Benutzer Informationen in Form von Text, graphischen Darstellungen oder Mischungen davon angezeigt werden. Die Anzeige kann insbesondere teildurchlässig sein, also so ausgestaltet sein, dass der Träger auch die Umgebung hinter der Anzeige erkennen kann. Besonders bevorzugt werden dem Träger die Informationen bzw. Hinweise oder Darstellungen kontaktanalog angezeigt, was manchmal auch als augmented reality bezeichnet wird. Dabei wird dem Träger der Datenbrille die Information an einem Ort angezeigt, der an dem Ort eines Objektes in der Umgebung orientiert ist, also beispielsweise an das Objekt angrenzend oder dieses überlagernd. Zur Realisierung der Kontaktanalogie, muss typischerweise die Position des Objektes in der Umgebung und die Pose der Datenbrille in Relation zum Objekt bekannt sein, also die Position der Datenbrille und die Ausrichtung der Datenbrille.

Es sind Datenbrillen bekannt geworden, die ebenfalls jeweils eine Kamera umfassen, die Aufnahmen in Blickrichtung des Trägers der Datenbrille macht, siehe beispielsweise WO 2013/012914.

Dokument WO 00/52563 offenbart ein Kopfverfolgungssystem, umfassend eine an einem Helm montierte Kamera und im Cockpit eines Kampfflugzeugs verbaute Marker.

Dokument WO 2005/124429 A1 offenbart ein interaktives Verfahren zum Präsentieren von Informationen in einem Bild.

Dokument EP 2254023 A2 offenbart Verfahren zum Ausrichten von Bildern gemäß externen Markern in augennahen Anzeigen.

Datenbrillen können auch in Fahrzeugen genutzt werden, um kontaktanaloge Informationen anzuzeigen. Diese Informationen können andere Verkehrsteilnehmer oder Objekte im Fahrzeug betreffen. Um kontaktanaloge Informationen anzeigen zu können, muss in den meisten Fällen auch hier die Pose der Datenbrille bekannt sein. Bekannt sind Inertialsensoren (Beschleunigung, Gyroskop, Kompass), die eine relative Orientierung eines elektronischen Geräts, u.a. auch typischerweise Datenbril-len, bestimmen können. Allerdings unterliegen Inertialsensoren Rauschen und einer zeitlichen Drift. Sie sind vor allem im Fahrzeug aufgrund der Fahrzeugeigenbewegung ungeeignet, da lediglich die Superposition der Fahrzeug- und Kopfbewegung sensiert wird. Diese Sensoren ermöglichen keine Aussage einer Position, nur der relativen Orientierung. Eine Absolut-Referenzierung der Orientierung setzt ein Magnetometer voraus, welches im Fahrzeugkontext aufgrund der starken Störungen nicht benutzt werden kann.

Es ist eine Aufgabe der vorliegenden Erfindung, eine Datenbrille bereitzustellen, mit der die Pose der Datenbrille im Fahrzeug bestimmt werden kann. Ebenso ist es eine Aufgabe der vorliegenden Erfindung, diese Posenbestimmung in Fahrzeugen möglichst genau und technisch zuverlässig zu ermöglichen.

Die Aufgabe der Erfindung wird durch die Gegenstände der unabhängigen Ansprüche gelöst. Vorteilhafte Weiterbildungen sind in den abhängigen Ansprüchen definiert.

Ein Aspekt betrifft eine Datenbrille, umfassend: eine erste Anzeige; eine Kamera; Elektronische Rechenmittel, wobei die Datenbrille zur Ausführung der folgenden Schritte eingerichtet ist: Aufnehmen des Umfelds der Datenbrille mithilfe der Kamera; Erkennen eines von einer zweiten Anzeige angezeigten Bildes in den Aufnahmen der Kamera; Erkennen, dass das angezeigte Bild einen Marker zur Posenbestimmung der Datenbrille umfasst; Erkennen des Markers; Bestimmen der Pose der Datenbrille mithilfe des erkannten Markers. Ferner kann die Auswerteeinheit zum Erkennen der zweiten Anzeige in den Aufnahmen der Kamera eingerichtet sein. Die Ausrichtung und Position der Anzeige und damit des angezeigten Markers sind typischerweise vordefiniert bzw. bekannt oder werden bereitgestellt. Die Bestimmung der Pose kann insbesondere relativ zur Ausrichtung und Position der zweiten Anzeige vorgenommen werden. Die Pose der Datenbrille kann die Ausrichtung der Datenbrille in einem dreidimensionalen Raum und die Position der Datenbrille in einem dreidimensionalen Raum beschreiben. Der Marker kann einen Teil der oder die volle Größe des Bildes aufweisen, das wiederum im Wesentlichen die gesamte zweite Anzeige ausfüllen kann. Die zweite Anzeige ist typischerweise eine Anzeige des Innenraums des Fahrzeugs, wie ein Kombiinstrument oder eine Anzeige, die im Armaturenbrett (beweglich) verbaut ist und zur Darstellung von Navigations- und Infotainmentinformationen dient.

Es wird eine Bestimmung der Pose der Datenbrille aufbauend auf der oder den Aufnahmen der Kamera der Datenbrille vorgeschlagen. Um die Posenbestimmung zu erleichtern wird auf einer Anzeige ein vordefinierter Marker angezeigt, der sich zur Bestimmung der Pose der Datenbrille eignet, also insbesondere gegeneinander abgegrenzte Flächen oder Linien darstellt, in einigen Implementierungen ähnlich oder gleich einem QR-Code. Mithilfe der Abbildung des Markers in der Aufnahme (aus der Perspektive der Kamera der Datenbrille), dem Wissen um die Ausgestaltung des Markers und der Position und Ausrichtung der zweiten Anzeige, kann auf die Pose der Datenbrille rückgeschlossen werden. Verfahren hierzu sind im Stand der Technik bekannt. Der Marker wird auf der Anzeige allerdings derart angezeigt, dass es für einen Menschen mit bloßem Auge nicht wahrnehmbar ist. Dies kann insbesondere dadurch Verwendung von Steganograhpie und/oder Watermarking erreicht werden. Mithilfe der Kamera der Datenbrille (und ggf. unter Einsatz von Bildverarbeitungsalgorithmen) ist der Marker jedoch erkennbar.

Dies ermöglicht eine robuste Posenbestimmung, da die absolute Pose der Datenbrille bestimmt wird, was mithilfe der derzeit und zukünftig verfügbaren Kameratechnik ebenfalls mit ausreichender Genauigkeit möglich ist. Weiterhin werden im Fahrzeuginnenraum keine zusätzlichen Einbauten als Marker zur Posenbestimmung benötigt. Im Vergleich zu einem System, bei dem die Pose der Datenbrille durch im Fahrzeug angeordnete Kameras bestimmt würde und dann zunächst zur Datenbrille übertragen werden muss, um eine kontaktanaloge Darstellung zu ermöglichen, ermöglicht die hier offenbarte Erfindung eine Verringerung der Latenzen (Zeitverzug bis zur Anpassung der kontaktanalogen Darstellung) nach Kopfbewegungen. Dies deshalb, da die Pose der Datenbrille in der Datenbrille selbst errechnet wird und nicht erst zur Datenbrille übertragen werden muss.

Die zweite Anzeige dient typischerweise einem anderen Zweck, nämlich dazu für den Menschen wahrnehmbare text- oder grafikbasierte Informationen anzuzeigen, nämlich ein Informationsbild. In einer typischen Anwendung ist die zweite Anzeige an einem Armaturenbrett eines Fahrzeugs verbaut, die im Rahmen eines Anzeige-Bedien-Konzept dazu dient, den Fahrer des Fahrzeugs (oder den Beifahrer) Auswahlmenüs, Landkarten, Navigationshinweise, oder beispielsweise illustrierende Grafiken oder Bilder anzuzeigen. Alternativ kann die Anzeige auch ein sogenanntes Kombiinstrument, das typischerweise die Geschwindigkeit des Fahrzeugs anzeigt, sein. Die im Rahmen dieses Anzeige-Bedien-Konzeptes vorgesehenen Darstellungen eigenen sich wenig zur Aufnahme und Bestimmung der Pose einer Datenbrille. Die typischen Darstellungen sind veränderlich und umfassen häufig keine klar begrenzten geometrischen Formen. Gemäß der hier vorgeschlagenen Datenbrille und dem vorgeschlagenen Verfahren wird ein Marker mithilfe von Steganographie oder Watermarking in das Informationsbild eingearbeitet und ist dann eingebettet. Je nach Informationsbild wird eine dazu passende Einbettung des Markers in das Informationsbild bestimmt. Durch die Einbettung werden typischerweise die Farben und/oder die Helligkeit von Bereichen des Informationsbildes geändert. Für den Menschen ist der eingebettete Marker im Informationsbild nicht wahrnehmbar, er kann mit bloßem Auge und in typischen Betrachtungsabständen von der Anzeige nur das Informationsbild wahrnehmen. Der Marker ist vordefiniert und wird der Datenbrille bereitgestellt bzw. ist für diese abrufbar gespeichert. Zum Erkennen des Markers in der Aufnahme des Bildes muss gegebenenfalls zunächst dem bei der Einbettung verwendeten Steganographie- oder Watermarking Verfahren entsprechendes Verfahren verwendet werden.

In einer typischen Implementierung wird zur Bestimmung der Pose der Datenbrille die Pose, also die Position und Ausrichtung, der zweiten Anzeige berücksichtigt. Die Pose der zweiten Anzeige ist meist unveränderlich und eine einmalige oder seltene Übertragung zur Datenbrille kann deshalb ausreichend sein.

In manchen Implementierungen ist die Datenbrille ferner eingerichtet zum: Empfangen eines Hinweises, dass der Marker auf der zweiten Anzeige angezeigt wird. Die Datenbrille kann dazu eingerichtet sein, nur in den Fällen, in denen der Hinweis empfangen wird oder für eine bestimmte Zeit danach, die Erkennung des Markers zu versuchen. Dies ermöglicht eine Einsparung von Rechenkapazität und Energie, was die Batterielaufzeit der Datenbrille erhöht.

Schließlich kann die Datenbrille ferner eingerichtet sein zum: Kontaktanalogen Anzeigen einer Darstellung auf der ersten Anzeige abhängig von der bestimmten Pose der Datenbrille. Dazu empfängt die Datenbrille eine anzuzeigende Darstellung und den Ort in der Umgebung (oder einem Referenzort bezogen auf die Position der zweiten Anzeige oder des Fahrzeugs), an dem die Darstellung für den Benutzer der Datenbrille erscheinen soll. Entsprechend der von der Datenbrille selbst festgestellten Pose wird die Darstellung von der Datenbrille an entsprechend bestimmten Positionen der ersten Anzeige (also auf der Anzeige der Datenbrille) angezeigt.

Ein anderer Aspekt betrifft ein Fahrzeug, umfassend eine Anzeigensteuerung und eine Anzeige, wobei das Fahrzeug dazu eingerichtet ist, die folgenden Schritte auszuführen: Bestimmen eines auf der Anzeige anzuzeigenden Informationsbildes; Ändern des Informationsbildes derart, dass ein Marker darin eingebettet wird, der für das bloße menschliche Auge nicht sichtbar ist; wobei der Marker derart gestaltet ist, dass er die Posenbestimmung einer Datenbrille mithilfe einer Kameraaufnahme der Datenbrille ermöglicht; Anzeigen des geänderten Informationsbildes. Das geänderte Informationsbild ist also das Bild, das auf der Informationsanzeige oder dem Kombiinstrument angezeigt wird.

### KURZE BESCHREIBUNG DER ZEICHNUNGEN

Fig. 1 zeigt schematisch eine Datenbrille gemäß einem Ausführungsbeispiel.
Fig. 2 zeigt schematisch den Einsatz einer Datenbrille in einem Fahrzeug gemäß einem Ausführungsbeispiel.

Gleiche Bezugszeichen beziehen sich auf sich entsprechende Elemente über die Figuren hinweg.

### DETAILLIERTE BESCHREIBUNG DER AUSFÜHRUNGSBEISPIELE

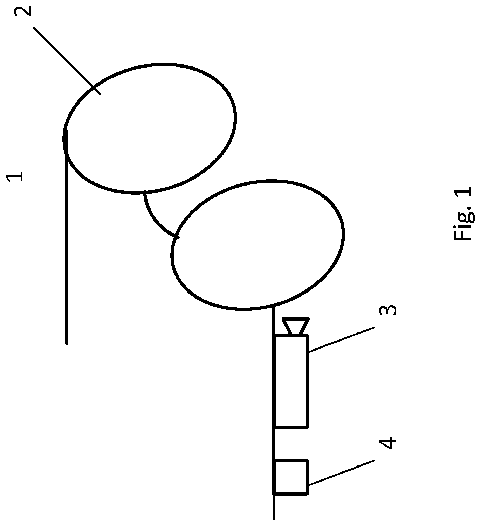

Fig. 1 zeigt schematisch eine Datenbrille 1 gemäß einem Ausführungsbeispiel. Die Datenbrille 1 umfasst zwei Teilanzeigen 2, je eine für das linke und das rechte Auge. Des Weiteren umfasst die Datenbrille 1 eine Kamera 3 und eine Auswerteeinheit 4. Nicht in Fig. 1 dargestellt, aber von der Datenbrille 1 umfasst ist ein Akkumulator und ein Wi-Fi Modul zur drahtlosen Funkübertragung. Die Datenbrille wird wie eine typische Sehhilfe auf dem Kopf getragen, wobei die Datenbrille auf der Nase und den Ohren aufliegt. Die Kamera 3 ist in Blickrichtung des Trägers (nicht gezeigt) der Datenbrille 1 ausgerichtet und nimmt im Wesentlichen das Blickfeld des Trägers der Datenbrille 1 auf. Die Kamera 3 macht fortlaufend Aufnahmen, also beispielsweise alle 16 ms, im sichtbaren Bereich des Lichts.

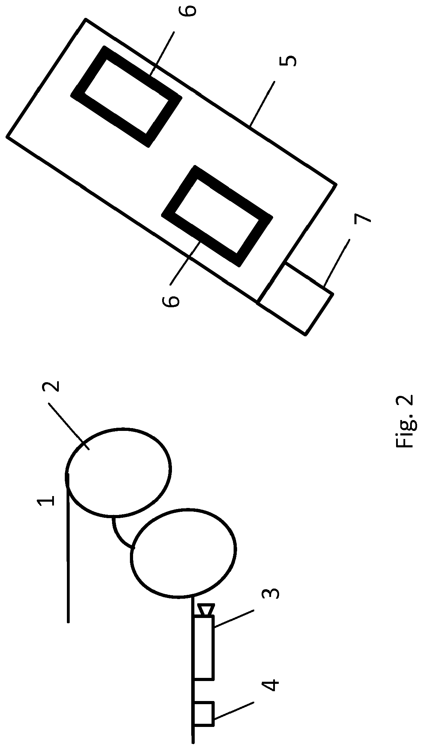

Fig. 2 zeigt schematisch den Einsatz einer Datenbrille in einem Fahrzeug gemäß einem Ausführungsbeispiel. Im Fahrzeug (in Fig. 1 nicht gezeigt) befindet sich die Datenbrille 1 und eine OLED-Anzeige 5 ("zweite Anzeige"), die im Armaturenbrett eines Fahrzeugs verbaut ist. Die Anzeige 5 wird von einer Ansteuereinheit 7 mit Befehlen beaufschlagt. Die Anzeige 5 dient im Fahrzeug zunächst dazu, als Anzeige im Rahmen eines Anzeige-Bedien-Konzeptes Menüstrukturen, Auswahlen und graphische Elemente für den Fahrer des Fahrzeugs anzuzeigen, also Informationsbilder. Dazu wird die Anzeige 5 mit einer Rate von 50Hz mit jeweils anzuzeigenden Bildern angesteuert.

Die angezeigten Bilder enthalten einen Marker, der mithilfe von Steganographie in das jeweilige Informationsbild eingebettet wird. Der Marker ist vorgespeichert. Ein Insasse des Fahrzeugs kann den eingebetteten Marker mit bloßem Auge nicht wahrnehmen. Das Informationsbild mit eingebettetem Marker ist in Fig. 2 nicht dargestellt.

In Fig. 2 zeigt schematisch den Marker 6, wie er nach entsprechender Bildverarbeitung (gemäß dem Steganographieverfahren, mit dem er eingebettet wurde), durch die Datenbrille 1 erkannt wird. Der Marker 6 umfasst zwei klar begrenzte und zum weißen Hintergrund stark kontrastierte Rechtecke. Mithilfe dieses Musters kann die Pose der Datenbrille in der nachfolgenden Verarbeitung genau bestimmt werden. Die Ansteuereinheit 7 übermittelt der Auswerteeinheit 4 per Wi-Fi, dass ein Marker über das Steganographieverfahren angezeigt wird. Basierend auf dieser empfangenen Information untersucht die Auswerteeinheit 4 den von der Kamera 3 empfangenen Bildstrom, um den Marker 6 zu erkennen und darauf basierend die Pose der Datenbrille in Relation zur Anzeige 5 zu bestimmen.

Die Datenbrille 1 empfängt von einer Recheneinheit mit Funkmodul des Fahrzeugs (nicht dargestellt) die Position eines zu markierenden Objekts im Umfeld des Fahrzeugs. Die Position des zu markierenden Objektes wird relativ zur Anzeige 5 angegeben. Ferner überträgt das Fahrzeug die Gestalt der kontaktanalogen Darstellung.

Die Auswerteeinheit 4 ermittelt den Ort auf der Anzeige 2 der Datenbrille 1, an dem eine kontaktanaloge Darstellung anzuzeigen ist. Die Datenbrille 1 zeigt die Darstellung am ermittelten Ort an, wodurch die Darstellung für den Träger der Datenbrille auf kontaktanaloge Art erscheint.

Die Ansteuereinheit 7 ist so konfiguriert, dass der eingebettete Marker nicht unmittelbar nach Bedieneingaben eines Benutzers angezeigt wird. So kann beispielsweise nach einer Eingabe für 0,6s auf die Einbettung des Markers verzichtet werden. Es ist davon auszugehen, dass der Benutzer direkt nach einer Eingabe die Anzeige 5 intensiv betrachtet. In dieser Situation könnte die Einbettung des Markers 6 dem Benutzer auffallen und wird deshalb vorteilhafterweise vermieden. Des Weiteren könnte auf die Einbettung des Markers 6 immer dann verzichtet werden, wenn Bildänderungen für das Anzeige-Bedien-Konzept stattfinden, also beispielsweise beim Scrollen oder Wechseln in eine andere Funktion des Fahrzeugs (Navigation zu Radio, Medienstücke zu Einstellungen, etc.).

## Patentansprüche

1. Datenbrille, umfassend:
eine erste Anzeige (2);
eine Kamera (3);
Elektronische Rechenmittel (4), wobei die Datenbrille zur Ausführung der folgenden Schritte eingerichtet ist:
Aufnehmen des Umfelds der Datenbrille mithilfe der Kamera (3);
Erkennen eines von einer zweiten Anzeige (5) angezeigten Bildes in den Aufnahmen der Kamera (3);
Erkennen, dass das angezeigte Bild einen Marker (6) zur Posenbestimmung der Datenbrille umfasst;
Erkennen der Abbildung des Markers (6) in der Aufnahme;
Bestimmen der Pose der Datenbrille mithilfe der erkannten Abbildung des Markers (6);
**dadurch gekennzeichnet, dass** das Bild den Marker (6) und ein Informationsbild umfasst;
wobei das Informationsbild für das menschliche Auge wahrnehmbar ist;
wobei der Marker (6) derart in das Informationsbild eingebettet ist, dass er für das menschliche Auge nicht wahrnehmbar ist.

2. Datenbrille nach Anspruch 1, wobei der Marker (6) die Farben und/oder Helligkeiten von Bereichen des Informationsbildes ändert.

3. Datenbrille nach einem der vorhergehenden Ansprüche, wobei zur Bestimmung der Pose der Datenbrille die Pose, also die Position und Ausrichtung, der zweiten Anzeige (5) berücksichtigt wird.

4. Datenbrille nach einem der vorhergehenden Ansprüche, die ferner eingerichtet ist zum:
Empfangen eines Hinweises, dass der Marker (6) auf der zweiten Anzeige (5) angezeigt wird.

5. Datenbrille nach einem der vorhergehenden Ansprüche, die ferner eingerichtet ist zum:
Kontaktanalogen Anzeigen einer Darstellung auf der ersten Anzeige (2) abhängig von der bestimmten Pose der Datenbrille.

6. Verfahren zum Bestimmen der Pose einer Datenbrille, welche eine erste Anzeige (2) und eine Kamera (3) umfasst, wobei das Verfahren die folgenden Schritte umfasst:
Aufnehmen des Umfelds der Datenbrille mithilfe einer Kamera (3) der Datenbrille;
Erkennen eines von einer zweiten Anzeige (5) angezeigten Bildes in den Aufnahmen der Kamera (3);
Erkennen, dass das angezeigte Bild einen Marker (6) zur Posenbestimmung der Datenbrille umfasst;
Erkennen des Markers (6);
Bestimmen der Pose der Datenbrille mithilfe des erkannten Markers (6);
**dadurch gekennzeichnet, dass** das Bild den Marker (6) und ein Informationsbild umfasst;
wobei das Informationsbild für das menschliche Auge wahrnehmbar ist;
wobei der Marker (6) derart in das Informationsbild eingebettet ist, dass er für das menschliche Auge nicht wahrnehmbar ist.

7. Fahrzeug, umfassend eine Anzeigensteuerung und eine Anzeige (5), wobei das Fahrzeug dazu eingerichtet ist, die folgenden Schritte auszuführen:
Bestimmen eines auf der Anzeige (5) anzuzeigenden Informationsbildes;
Ändern des Informationsbildes derart, dass ein Marker (6) darin eingebettet wird, der für das bloße menschliche Auge nicht sichtbar ist; wobei der Marker (6) derart gestaltet ist, dass er die Posenbestimmung einer Datenbrille gemäß Anspruch 1 mithilfe einer Kameraaufnahme der Datenbrille ermöglicht;
Anzeigen des geänderten Informationsbildes.

## Claims

1. Data eyeglasses, comprising:
a first display (2);
a camera (3);
electronic computing means (4), wherein the data eyeglasses are configured to carry out the following steps:
recording the surroundings of the data eyeglasses with the aid of the camera (3);
detecting an image displayed by a second display (5) in the recordings of the camera (3);
detecting that the displayed image comprises a marker (6) for determining the pose of the data eyeglasses;
detecting the representation of the marker (6) in the recording;
determining the pose of the data eyeglasses with the aid of the detected representation of the marker (6);
**characterised in that** the image comprises the marker (6) and an information image;
wherein the information image is perceptible by the human eye;
wherein the marker (6) is embedded in the information image in such a way that the marker is not perceptible by the human eye.

2. Data eyeglasses according to claim 1, wherein the marker (6) changes the colours and/or brightness of areas of the information image.

3. Data eyeglasses according to any one of the preceding claims, wherein, for determining the pose of the data eyeglasses, the pose of the second display (5), that is to say the position and orientation thereof, is taken into consideration.

4. Data eyeglasses according to any one of the preceding claims, which are also arranged to: receive a notification that the marker (6) is displayed on the second display (5).

5. Data eyeglasses according to any one of the preceding claims, which are further arranged to: provide contact analogue display of a visualisation on the first display (2) depending on the determined pose of the data eyeglasses.

6. A method for determining the pose of data eyeglasses which comprises a first display (2) and a camera (3),
wherein the method comprises the following steps:
recording the surroundings of the data eyeglasses with the aid of a camera (3) of the data eyeglasses;
detecting an image displayed by a second display (5) in the recordings of the camera (3);
detecting that the displayed image comprises a marker (6) for determining the pose of the data eyeglasses;
detecting the marker (6);
determining the pose of the data eyeglasses with the aid of the detected marker (6);
**characterised in that** the image comprises the marker (6) and an information image;
wherein the information image is perceptible by the human eye;
wherein the marker (6) is embedded in the information image in such a way that the marker is not perceptible by the human eye.

7. A vehicle comprising a display control and a display (5), wherein the vehicle is arranged to carry out the following steps:
determining an information image to be displayed on the display (5);
changing the information image in such a way that a marker (6) which is not visible to the naked human eye is embedded in the information image; wherein the marker (6) is designed such that it enables the pose of data eyeglasses according to claim 1 to be determined with the aid of a recording of the camera of the data eyeglasses;
displaying the changed information image.

## Revendications

1. Lunettes intelligentes comprenant :
un premier affichage (2),
une caméra (3),
des moyens de calcul électroniques (4), les lunettes intelligentes étant conçues pour permettre la mise en œuvre des étapes suivantes consistant à :
prendre une prise de vue de l'environnement des lunettes intelligentes au moyen de la caméra (3),
identifier une image affichée par un second affichage (5) dans la prise de vue de la caméra (3),
identifier que l'image affichée comporte un repère (6) pour permettre la détermination de la pose des lunettes intelligentes,
identifier l'illustration du repère (6) dans la prise de vue,
déterminer la pose des lunettes intelligentes au moyen de l'illustration du repère (6) identifié,
**caractérisées en ce que**
l'image comporte le repère (6) et une image d'information,
l'image d'information est perceptible pour l'œil humain,
le repère (6) est inclus dans l'image d'information de sorte qu'il ne soit pas perceptible pour l'œil humain.

2. Lunettes intelligentes conforme à la revendication 1,
dans lesquelles le repère (6) modifie les couleurs et/ou les luminosités de zones de l'image d'information.

3. Lunettes intelligentes conforme à l'une des revendications précédentes,
dans lesquelles le second affichage (5) est pris en considération pour la détermination de la pose des lunettes intelligentes, c'est-à-dire la position et l'orientation de celles-ci.

4. Lunettes intelligentes conforme à l'une des revendications précédentes,
qui sont en outre réalisées pour permettre :
de recevoir une indication selon laquelle le repère (6) est affiché sur le second affichage (5).

5. Lunettes intelligentes conforme à l'une des revendications précédentes,
qui sont en outre réalisées pour permettre :
d'afficher par analogie de contact une représentation sur le premier affichage (2) en fonction de la pose déterminée de ces lunettes intelligentes.

6. Procédé permettant de déterminer la pose de lunettes intelligentes qui comportent un premier affichage (2) et une caméra (3), ce procédé comprenant les étapes suivantes consistant à :
prendre une prise de vue de l'environnement des lunettes intelligentes à l'aide de la caméra (3) des lunettes intelligentes,
identifier une image affichée par un second affichage (5) dans la prise de vue de la caméra (3),
identifier que l'image affichée comporte un repère (6) pour déterminer la pose des lunettes intelligentes,
identifier le repère (6),
déterminer la pose des lunettes intelligentes à l'aide du repère (6) identifié,
**caractérisées en ce que**
l'image comporte le repère (6) et une image d'information,
l'image d'information est perceptible par l'œil humain,
le repère (6) est inséré dans l'image d'information de sorte qu'il ne soit pas perceptible par l'œil humain.

7. Véhicule comprenant une commande d'affichage et un affichage (5), ce véhicule étant réalisé pour permettre la mise œuvre des étapes suivantes consistant à :
déterminer une image d'information devant être affichée sur l'affichage (5),
modifier l'image d'information de sorte que soit inséré dans celle-ci un repère (6) qui n'est pas visible pour l'œil nu, ce repère (6) étant conformé de façon à permettre de déterminer la pose de lunettes intelligentes conforment à la revendication 1, à l'aide d'une prise de vue d'une caméra des lunettes intelligentes,
afficher l'image d'information modifiée.
